# EUROPEAN PATENT SPECIFICATION

(11) **EP 2 360 740 B1**
(45) Date of publication and mention of the grant of the patent: **09.10.2013**
(21) Application number: 10250306.7
(22) Date of filing: 22.02.2010
(51) Int. Cl.: F24J 2/52, H01L 31/048

(54) **Solar panel mounting**
Befestigung für Solarmodule
Fixation de panneaux solaires

(43) Date of publication of application: 24.08.2011
(73) Proprietor: Baxi Heating (UK) Limited, Preston, Lancashire PR5 6FN (GB)
(72) Inventor: Hock, Jonathan, Preston Lancashire, PR5 6FN (GB); Marriott, Adam, Preston Lancashire (GB)
(74) Representative: Franks & Co Limited

(56) References cited:
- EP-A1- 2 058 606
- EP-A2- 1 348 915
- DE-A1-102005 012 054
- DE-A1-102005 040 368

## Description

### Field of the Invention

The present invention relates to roof mountings particularly although not exclusively for solar panels, solar arrays and the like.

### Background to the Invention

Roof mounted solar panels for domestic or commercial buildings are known in the art. Solar panels can be of various types including photovoltaic cell panels which convert incident sunlight directly into electricity, or thermal collectors comprising arrays of evacuated tubes, or flat plate solar collectors which heat a fluid which is passed through a domestic hot water store where heat is transferred to a domestic hot water supply.

Each of these known types of solar panel generally comprise a flat panel structure which is mounted facing into the sun, typically at an angle to the horizontal. Typical dimensions can be in the range of area 1.5 to 2.5 meters², and depth 5 to 12cm.

In the United Kingdom and other regions having a temperate climate and significant rain fall, pitched roofs are common, and it is known to mount solar panels approximately parallel to the main outer surface of a pitched roof.

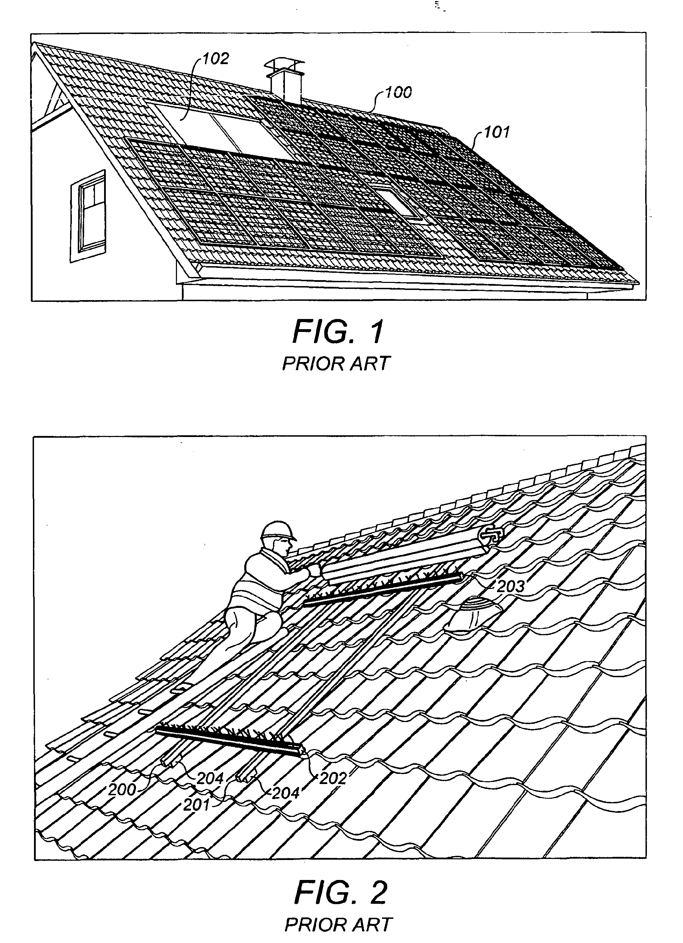

Referring to Figure 1 herein, there is illustrated schematically an installation of an array of known solar panels fixed to a pitched roof 100 of a house. In this example, the panels comprise a mixture of photovoltaic panels 101, and flat solar collector panels 102 having internal fluid tubes, for heating domestic hot water. In this example, the photovoltaic panels are mounted parallel to and above a pitched tiled roof 100.

The cost and problems with installation of solar panels of all types is a major inhibitor to their widespread domestic and commercial adoption. Whilst new build housing can be more easily designed to incorporate solar panels on roofs, the majority of domestic housing and commercial buildings are legacy building stock already built. Consequently, to achieve wide spread adoption of solar panel technology requires fitting solar panels to existing roofs.

One common type of roof in western Europe is the tiled or slate pitched roof of known construction. Such roofs comprise a plurality of angled upright beams extending between a ridge and an eave, over which is positioned a waterproof membrane. On top of the water proof membrane are placed a plurality of horizontally spaced apart wooden battens, and on to those battens, are fixed roof tiles or slates, using roofing nails. Once constructed, fitting solar panels to such roofs usually requires two or more persons to have access to the outside roof via ladders or scaffolding. There are generally two types of installation which include (a) a flush fitting or "in roof" fitting and (b) externally mounted or "on roof".

In a flush "in roof" fitting installation as shown at 102 in Figure 1, the solar panels are fitted in place of roof tiles or slates, and form the outer covering of the roof. Retrospective fitting of flush mounted roof panels involves removal of a significant area of roof tiles or slates, fitting the roof panels to the roof structure, and making a weather tight seal using flashing between the edges of the solar panels, and adjacent tiles or slates.

For slate roofs and/or tiled roofs of the Roman (Arabian) type tile as commonly used in Southern Europe, one known "on roof" mounting method involves drilling through the slates directly into an underlying rafter, and applying an upright bolt mounting protruding from the slate, where a lower end of the bolt mounting is screwed into the underlying rafter. At least four such bolts are fixed into the roof, and a pair of parallel horizontal cross bars are attached to the protruding bolts, on to which the solar panel or solar array is mounted.

Using this method, usually only a small number of slates need to be removed and replaced, for each solar panel or solar array, typically four slates, one per bolt mounting. Additionally, further holes need to be drilled in the slate/ tile roof through which the pipe work or electric cables are passed into the roof void. A water tight and weather tight seal is made by including an annular rubber seal along the bolt which contacts the slate/ tile, and by applying a silicone sealant to the bolt and rubber seal at the place where it passes through the slate.

Another known method of installation of an external mounting ("on roof" mounting) for tiled roofs involves removing some of the tiles, attaching mounting brackets to the upright rafters or to horizontal cross beams / noggins joined between rafters, replacing the tiles to leave the mounting brackets protruding from the tile roof, and then fixing the solar panels to the mounting brackets. Pipe connections or electrical cables are passed through holes in the roof, and must be made water tight and weather proof.

For solar collectors which are installed on a pitched roof it is normal to have some kind of connector or bracket which is lapped into the tiling, with the tiles on top so as to maintain the water tightness of the roof. That mounting has to accommodate different styles of roof tile, which can require different heights of the mounting rail on which to mount the collector, due to different tile depths

The amount of labor required to retro-fit solar panels and the difficulty of installation are a major component in the overall cost of a solar panel installation. The finished job must be waterproof, and weather tight and able to resist high winds, storms, extended hot sun light, snow, ice and all the usual weather conditions.

Referring to Figure 2 herein, there is illustrated schematically, a human operative in the final stages of fixing a flat array of solar tubes to a pitched tiled roof. The operative has already fixed a pair of upright rails 200, 201 parallel to the tiles, and has mounted a pair of cross spars 202, 203 and a tube manifold 204 horizontally across the rails. The rails 200, 201 are attached to the roof by a set of mountings 204 which pass underneath the tiles, and are secured to horizontal battens underneath the tiles. To fix the mounting brackets, the operative must remove some of the tiles and re-fit them back over the mounting brackets.

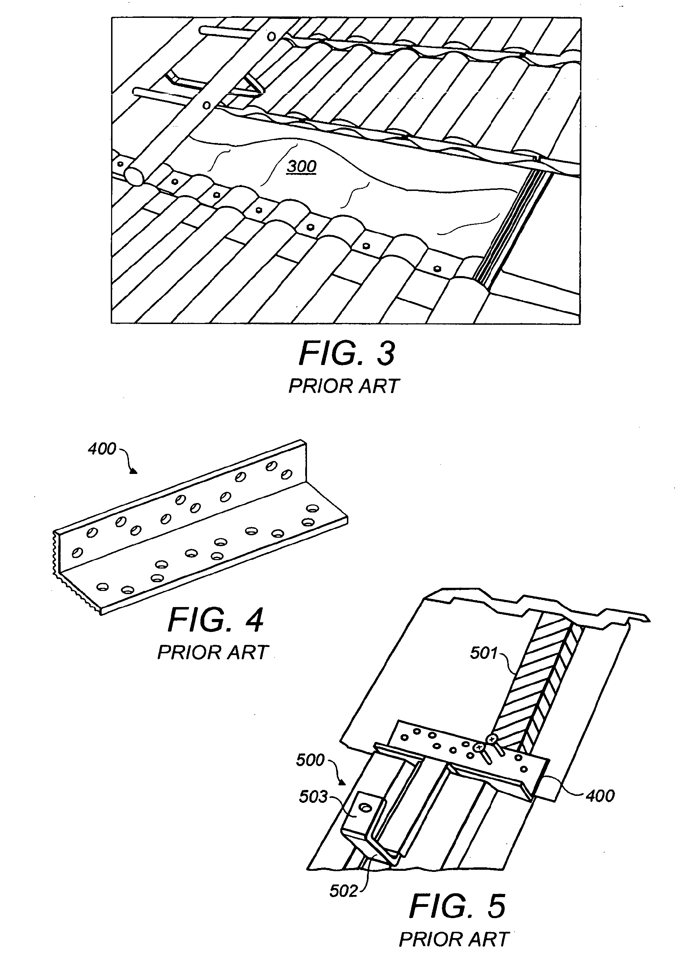

Referring to Figure 3 herein, there is illustrated schematically an initial stage of fixing a known solar panel or solar tube array mounting frame to a pitched tiled roof. First of all, a section of a row of individual tiles must be removed from the roof using known roofing techniques, to expose a felt membrane 300 which lies underneath the tiles. This involves an operative crawling up a ladder on the roof and removing part of a row of tiles.

Known mountings for external solar panel fixings rely on a pair of horizontal or upright rails, with one or more cross members, with the solar panel or solar array being mounted to the cross members. Not all installations use the upright rails, and the horizontal beams may be attached directly to the mounting brackets.

To complete the installation, holes need to be made in the flexible waterproof membrane 300, at positions adjacent to the mountings so that electrical cables and/or pipe work can be fed through the roof into the roof void, and the outer tiles need replacing to the roof. Where tiles have been damaged in removal, new tiles of a similar type may need to be fitted. Where the electrical cables or pipe work are passed through the waterproof membrane, they need to be sealed around the edges of the holes to avoid water entering the roof void.

The solar panel can then be fitted either to horizontal beams placed across the upright rails, or directly to the upright vertical rails, using bolts, clips, or other fixings.

Referring to Figure 4 herein, there is illustrated schematically a known "L" shaped angle bracket which can be used to anchor a mounting bracket to a roof structure. The angle piece 400 comprises two perpendicularly oriented plate members, connected to each other at one edge, each having a plurality of apertures, for fitment of screws or bolts.

Referring to Figure 5 herein, there is illustrated schematically a method of fixing the known "S" shaped mounting bracket 500 and the angle bracket of Figure 4 to a roof structure. The mounting bracket 500 comprises an upright portion 502 which extends upwardly from the roof, and a bent over flat portion 503 which lies substantially parallel to the roof when the bracket is fitted. The main length of mounting bracket 500 is positioned in a trough of a profiled tile, and a first end of the mounting bracket is bolted to the angle bracket 400. The angle bracket is screwed to an upright rafter 501 of the roof structure or, where a rafter is inconveniently positioned, to a horizontal noggin or cross beam fitted between adjacent rafters and of similar strength to the rafters, under the waterproof membrane.

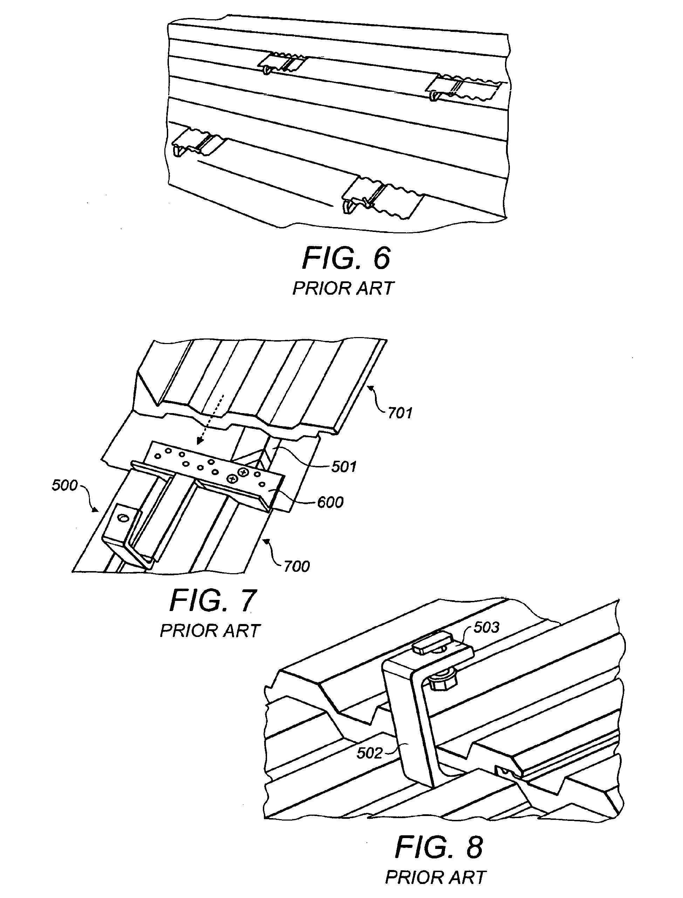

Referring to Figure 6 herein, there is illustrated schematically installation of a known set of mounting brackets for mounting a solar panel on a pitched roof. Four mounting brackets and angle pieces as described in Figures 4 and 5 herein are fitted at corners of a rectangle on a pitched roof. This entails locally removing one or a plurality of tiles at the position of each mounting bracket.

Referring to Figure 7 herein, there is illustrated schematically the mounting bracket and angle piece of Figures 4 and 5 herein installed on a roof. The main length of mounting bracket 500 is positioned in a trough of a profiled tile 700 , and a first end of the mounting bracket is bolted to an angle bracket 400. The angle bracket is screwed to an upright rafter 501 of the roof structure. Alternatively, one or more of the angle brackets can be screwed to cross beams or noggins fitted between rafters, of a similar strength to the rafters themselves. In Figure 7, for clarity the roof membrane is not shown, so as to show the underlying rafter.

Once the mounting bracket and angle piece are in situ on the roof, one or more tiles 701, which have been removed, are replaced and cover over the angle piece 400 and a main length of the mounting bracket 500.

Referring to Figure 8 herein, there is illustrated schematically the mounting bracket 500 when installed on the pitched roof, and with the tiles replaced over the mounting bracket. The mounting bracket protrudes from underneath an overlapping tile, at its lower end and extends in the direction substantially perpendicular to a main plane of the roof. The bent over portion 503 forms a mounting position spaced apart from and above the roof, for mounting a rail parallel to the roof, and on to which a solar panel, solar array or the like may be fitted. A pair of mounting brackets can be connected by a horizontal beam, on to which a solar panel is mounted, or alternatively, a pair of mounting brackets with one positioned above the other on the roof can be connected by an upright rail, with a solar panel or solar array attached to a pair of such upright rails.

Known mounting brackets for external solar panel fixing rely on a pair of horizontal or upright rails, with one or more cross members, with the solar panel or solar array being mounted to the cross members. Connecting the horizontal or upright rails to the mounting bracket typically involves a "T" bolt, and tightening a nut as shown in Figure 8, using a spanner or socket.

A problem with the known mounting brackets is that the lower ends of the bracket are fixed in height above the roof. The known mounting bracket provides that the underneath of the solar panel lies at a fixed distance from the upper surface of the tiles, due to the fixed distance of the upright portion 502. Since different roofs have different types of profiled tile or slate, of varying thicknesses, the upright portion of the known mounting bracket must be high enough to accommodate all types of slate or tile which may be reasonably encountered, to avoid having a proliferation of different sized mounting brackets to suit different types of slate or tile.

A prior art document EP 1348915 A2 discloses a mounting for a solar panel comprising two components wherein the second component is angularly adjustable with respect to the first component. The mounting however does not permit the installer to adjust the position to the height of the tile which means extra work in the tiles or in the mounting itself and does not permit the solar collector to have a correct height relative to the top surface of the tile. It is an on-going objective to make installation of solar panels more efficient and less time consuming by enabling height adjustment of a solar collector panel above a tiled roof surface.

In addition to this, since roof installation involves human operatives working at height above the ground, there are health and safety issues and installation generally requires a risk assessment to be made prior to commencing work. It is an ongoing objective to make installation of solar panels safer, by minimizing the number of tools required when working at height, minimizing the number of components used on the roof, minimizing the size and weight of components which need to be carried on to a roof, and minimizing the amount of time which an installation operative needs to spend at height on a roof.

Further, mountings for on-roof mounted solar panels or arrays must be strong enough to bear the weight of snow. Typically, every 100mm of snow fall will add up to 70kg of weight per 1 m², with additional weight added where snow falls down the roof from above the solar collector or panel. The mountings must also be strong enough to withstand the maximum wind loadings on and underneath the solar panels or solar arrays, once they are installed.

### Summary of the Invention

According to a first aspect there is provided a mounting for a solar panel, solar array or the like according to claim 1.

Said first component may comprise an engaging portion comprising a plurality of extending finger-like projections.

Said second component may comprise an engaging portion configured to wrap around said plurality of outwardly extending finger-like projections, in a locked angular relationship therewith.

Said mounting points preferably comprise a plurality of mounting lugs, adapted for mounting a beam thereto.

Preferably, said first and second components are detachable from each other by moving said first and second components relative to each other in a direction transverse to a plane in which they are adjustable with respect to each other.

Preferably, said mounting further comprises a retaining means for retaining said first and second components to each other and for preventing said first and second components moving relative to each other in a direction transverse to a plane in which said components are adjustable with respect to each other.

Preferably said retaining means comprises a spring clip.

The implementations include a mounting kit for a solar panel, solar array or the like, said mounting kit comprising:
a plurality of mountings as set out in the first aspect; and
one or a plurality of elongate beams;
wherein said one or a plurality of elongate beams are configured to engage a pair of said mounting points of a corresponding respective pair of said mountings, without the need for tools.

Preferably a said mounting point comprises:
a head portion;
a first engaging region positioned at a rear of said head portion; and
a second engaging region positioned at a front of said head portion;
said head portion being positioned between said first rearwardly positioned engaging portion and said second, forwardly positioned engaging portion.

Preferably said elongate beam comprises:
a rigid elongate body portion;
first engaging portion extending from said body portion and attached thereto;
a second engaging portion facing opposite and spaced apart from said first engaging portion, said second engaging portion being attached to said body portion, wherein said second engaging portion is positioned in a fixed spatial relationship to said first engaging portion.

According to a second aspect there is provided an elongate beam for mounting a solar panel, solar array or the like, said elongate comprising:
a curved engaging portion for engaging with a first part of a mounting lug; and
a downwardly extending skirt, having at a lower end an engaging lip for engaging a second part of a said mounting lug;
wherein said elongate beam is attachable to said mounting lug under manipulation by the human hand without the need for additional tools.

Specific embodiments presented herein provide a means of adjusting the height of the mounting spar for the solar collector, above the upper surface of the roof tiles using a rotary adjustment. The two components can be locked in any one of three positions with a clip or retainer to stop the two parts sliding apart once in situ. The cross bar then mounts on the appropriate one of these three features. Normally, a solar collector would be bolted to the cross bar.

Specific embodiments disclosed herein may provide a solar panel mounting bracket which requires less tools to be taken up onto the roof, and requires less manual manipulation than prior art systems.

The system presented herein may be quicker and easier to adjust than prior art solar panel roof mounting kits.

Once the lower part of the bracket has been attached to the roof, and the tiles replaced, subsequent mounting of the solar panel may be relatively easier, compared to prior art mounting kits.

Specific embodiments herein may provide for mounting of a cross spar between a pair of mounting arms using fewer tools and requiring fewer bolts to be fitted and tightened than hitherto.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 illustrates schematically a known installation of solar panels on a pitched roof, showing both "in roof' and "on roof" attachment of solar panels;
Figure 2 illustrates schematically installation of a known solar tube array in an "on roof" fitting using a known mounting kit;
Figure 3 illustrates schematically removal of a row of roof tiles during a known installation method for an "on roof" solar panel;
Figure 4 illustrates schematically a known angle piece used in a known "on roof" mounting kit;
Figure 5 illustrates schematically fitment of a known mounting bracket and angle plate to a tiled roof;
Figure 6 illustrates schematically an installation of four known mounting brackets to a pitched roof;
Figure 7 illustrates schematically a completed installed known mounting bracket prior to placement of a overlapping tile;
Figure 8 illustrates schematically a finished installation of a known mounting bracket on a pitched tiled roof;
Figure 9 illustrates schematically novel roof mounting bracket according to a specific implementation presented herein for "on roof' mounting of a solar panel, solar array or the like;
Figure 10 illustrates schematically the novel mounting bracket of Figure 9 for "on roof' mounting of a solar panel, solar array or the like to a pitched roof, in side view in a first mounting orientation;
Figure 11 illustrates schematically the mounting bracket of Figure 10 in side view in a second orientation;
Figure 12 illustrates schematically the mounting bracket of Figure 10 in side view in a third orientation;
Figure 13 illustrates schematically the mounting bracket of Figure 9 partially fitted to a profiled tiled roof using an angle bracket;
Figure 14 illustrates schematically in view from one end, a lower arm of the mounting bracket of Figure 9 installed in a tiled roof using a mounting bracket;
Figure 15 illustrates schematically in perspective view, a stage of installation of the mounting bracket of Figure 9 in a pitched tiled roof;
Figure 16 illustrates schematically in view from one side a first stage of fitment of the cross beam to a mounting bracket as shown in Figure 9 herein;
Figure 17 illustrates schematically in view from one end a second stage of fitment of the cross beam to a mounting bracket as shown in Figure 9;
Figure 18 illustrates schematically in perspective view an installation of a mounting kit comprising four mounting brackets and two cross beams as described with reference to Figures 9 to 17 herein installed on a pitched tiled roof;
Figure 19 illustrates schematically a "T" bolt for attachment of a solar panel, solar array or the like to the mounting kit of Figure 18;
Figure 20 illustrates schematically a plate mounted bolt for fitment of the solar panel, solar array or the like to the mounting kit of Figure 17; and
Figure 21 illustrates schematically a two bolt plate for fitment of a solar panel, solar array or the like to the mounting kit of Figure 17.

### Detailed Description

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

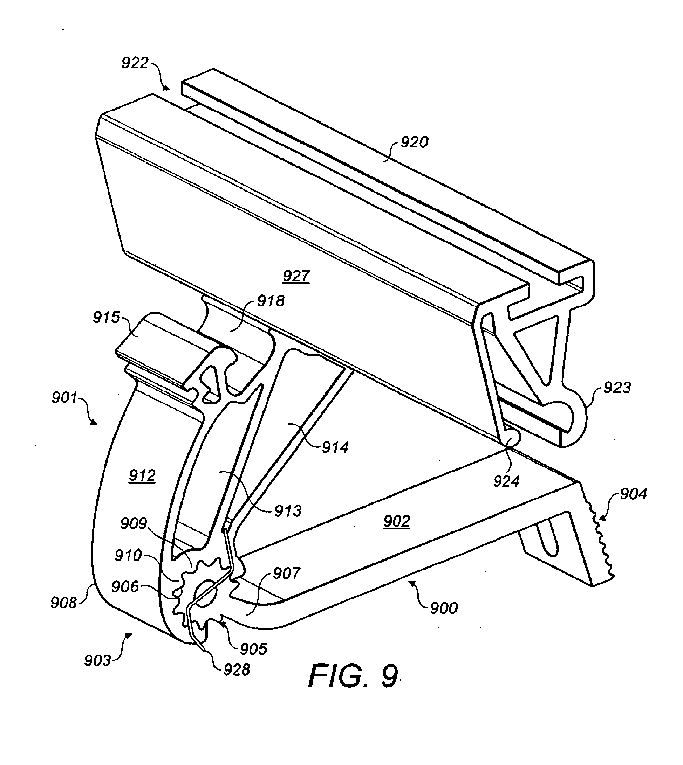

Referring to Figure 9 herein, there is illustrated schematically in perspective view a novel mounting bracket for installation of a solar panel, solar array or the like to a pitched roof presented herein. The mounting bracket comprises a lower arm 900 and an upper arm 901, the upper and lower arms being connected to each other by an angularly adjustable connector portion 903 which locks the lower and upper arms in a fixed rigid angular relationship to each other. Preferably, the lower and upper arms are formed of extruded aluminum, but in other embodiments may be formed of cast metal, cast plastic or may be molded.

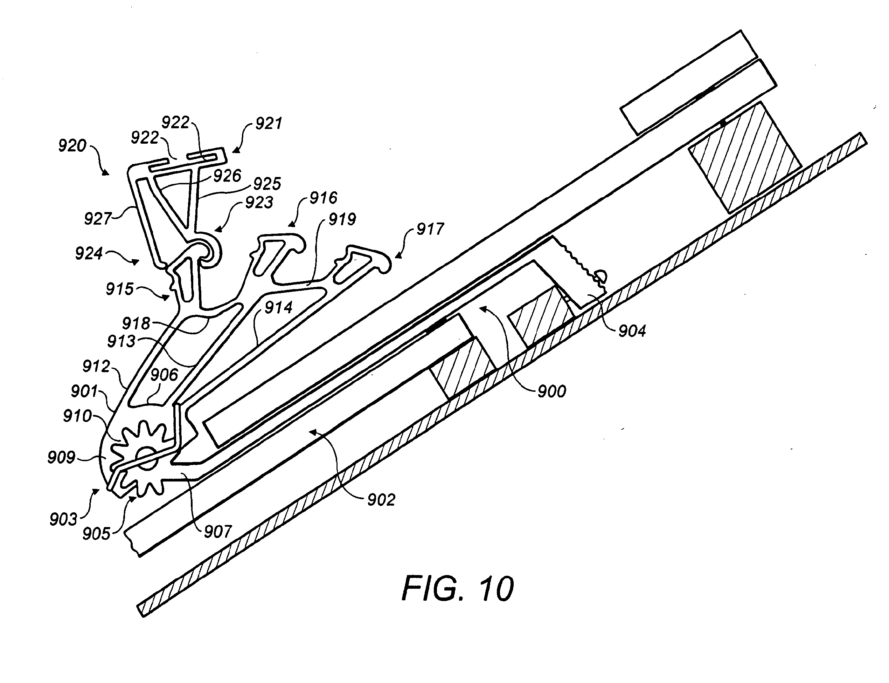

Referring to Figure 10 herein, there is illustrated schematically the mounting bracket in side view installed on a pitched roof.

Lower arm 900 comprises an elongate arm 902 having at a first end 903, a downwardly extending plate 904, extending in a direction transverse to a main direction of arm 902, and in a preferred embodiment at an angle of 95° to the main arm; at a second end of the arm 902, a substantially circular splined mounting portion 905 having a plurality of radially extending finger like protrusions 906 in the form of gear wheel teeth; the mounting 905 connected to the main arm 902 by a connecting portion 907 which extends in a direction transverse to a main length direction of the main arm 902, with the effect of positioning the splined mounting 905 off set and to one side from a main plane of the mounting arm 902.

The end plate 904 may have a slot or aperture, through which a screw, nail or other fixing may be passed for fixing the end plate to a horizontal wooden batten or to an angle bracket fixed to an inclined roof. An outwardly facing surface of the end plate 904 is provided with a plurality of ridges adjacent and in the vicinity of the lot for aperture, to enable a bolt or other fixing to grip against an outer surface of the end plate.

Upper arm 901 comprises a lower end 908 having a concave arcuate portion 909 comprising a plurality of inwardly facing projections 910 in the form of splines, teeth, or finger like projections, the plurality of projections forming a series of troughs and valleys arranged radially around a central axis and having an opposite profile to the protrusions of the mounting 905; extending from the substantially part circular engaging portion 909, a plurality of radially extending spokes 912 - 914; at a distal end of each said extending spoke is positioned a corresponding respective mounting part 915 - 917, said mounting parts spaced apart from each other.

A first mounting part 915 is connected to a second mounting part 916 by an intervening rigid connecting portion 918. Second mounting part 916 is connected to a third mounting part 917 by a second intervening connecting part 919.

Lengths of the successive spokes 912 - 914 are progressively longer, such that the position of the mounting parts 915 - 917 are placed at successively increasing distances from the main central axis around which the concave engaging portion 909 is centered.

Each mounting part comprises a head portion, a neck portion which connects the head portion to the rest of the upper arm, a first engaging region positioned at a rear of said head portion, and a second engaging region positioned at a front of the head portion. The head portion is positioned between said first rearwardly positioned engaging portion and the said second, forwardly positioned engaging portion, and in use when fitted to a pitched roof, the rearwardly facing engaging portion faces in a direction towards the ridge of the roof, and the forwardly facing engaging portion faces down the roof towards the gutter edge of the roof.

A detachable cross member 920, shown in perspective view in Figure 9, and in view from one end in Figure 10, comprises an elongate beam, preferably of extruded material such as aluminum or other suitable metal. Theelongate beam comprises a rigid elongate body portion; a first engaging portion extending from said body portion and attached thereto; and a second engaging portion facing opposite and spaced apart from said first engaging portion, said second engaging portion being attached to the body portion so that the second engaging portion is positioned in a fixed spatial relationship to the first engaging portion. The mounting lug of the bracket fits between the first and second engaging portions of the beam.

In cross section, the beam has an upper portion 921 comprising a partially enclosed inverted "T" shaped channel 922 into which a bolt head, flat circular plate, square or rectangular plate or the like can be slid from one end; a lower engaging part 923 having a curved engaging portion for engaging an outer surface of a said mounting part 915 - 917; and a forward engaging skirt part 927 comprising a protrusion 924 shaped for engaging a corresponding recess in a mounting part 915 - 917 of the upper arm. The curved engaging portion 923 is spaced apart from the slot channel 922 by a pair of bracing parts 925, 926 respectively, the bracing parts forming a "V" shape, and rigidly holding the upper portion 921 surrounding the slot 922 in spaced apart relationship to the curved engaging portion 923. At a front edge of the spar is positioned the downwardly extending skirt portion 927, at a lower end of which is positioned the inwardly projecting engaging portion 924.

In use, lower arm 900 is positioned mostly underneath a roof tile, except for a lower end which protrudes from a lower end of the roof tile. Upper arm 901 protrudes upwardly, and over the roof tiles.

A removable spring clip 928 fits around the connecting portion 903, keeping the splined mounting part 905 and the arcuate engaging portion 909 of the upper arm in locked engagement.

The first component 900 and second component 901 are detachable from each other by disengaging the spring clip 928, and sliding the second part in a direction transverse to a main plane intersecting both the first component and the second component. When the first component is mounted in situ on a roof, the second component will be slid substantially horizontally with respect to the first component, such that the splined or channeled engaging part 909 of the second component slides over the projecting splines or teeth of the engaging part 905 of the first component.

To adjust the angular orientation of the second component relative to the first component, in a disengaged state, the second component is aligned such that the channeled engaging portion 909 of the second component lines up with the radially protruding teeth or projections of the engaging part 905 of the first component, and sliding the second component on to the first component in a horizontal direction. The two components are then locked to each other to prevent further movement in an axial direction, i.e. horizontally, by engaging the spring retaining clip 928 which extends from one side of the components across the second component, and down the other side of the two components, thereby preventing any relative movement in a direction transverse to a plane intersecting both components, and when the first component is fitted to a roof, restraining movement of the second component in a horizontal direction. The spring clip is retained to the upper arm of the bracket, so as to avoid the spring becoming lost and falling down the roof during fitting, and is engagable or disengagable from the joint between the upper and lower bracket arms.

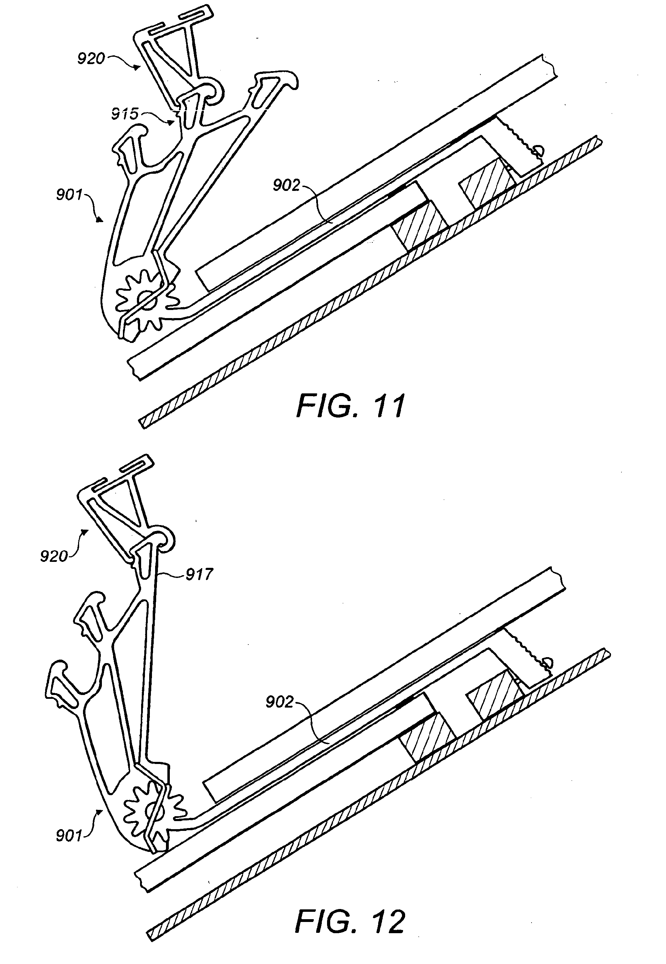

Referring to Figure 11 herein, there is illustrated schematically in view from one side, the mounting bracket of Figures 9 and 10 in a second orientation, where the beam 920 is mounted at a second distance from a main plane of the roof. In the second configuration, the second component 901 is oriented at a second angle in a vertical plane with respect to the first component, and positioning the middle mounting lug 915 at a second height above the main arm 902 of the first component, such that the beam 920 positioned with its flat upper surface aligned substantially parallel with a main plane of the roof, and parallel to a main direction of the arm 902 of the first component. In this configuration, the mounting bracket can accommodate a thicker tile profile than in the first orientation shown in Figure 10 herein.

Referring to Figure 12 herein, there is illustrated schematically the mounting in a third orientation, in which the second component makes a third angle in the vertical plane relative to the first component. To engage the second component to the first component at the third orientation involves sliding the concave engaging portion 909 at the lower end of the second component over the corresponding engaging fingers of the engaging portion 905 of the first component, at a different angular orientation compared to the first and second orientations described with reference to Figures 10 and 11 herein. The first and second components are locked to each other in a direction transverse to the vertical plane and prevented from disengaging, by retaining spring 928.

In the third orientation, the beam 920 engages the third, rearward most mounting lug 917, which is positioned at a third distance from the elongate arm 902 of the first component. The upper substantially flat surface of the beam 920 lies substantially in a plane parallel to a main plane of the roof, for mounting an underside of a solar panel, solar array or the like, substantially parallel to the outer surface of the roof and spaced apart from the roof.

In the embodiment shown, the plurality of mounting lugs are oriented with respect to the connecting portion, so that in use, as the bracket is adjusted between the first to third positions, the prominent mounting head is oriented such that in each case the beam is fitted with its upper surface facing in the same direction. That is, the beam undergoes no rotation between the first and third positions, but rather only the distance from the underneath of the tile is altered. However, in other embodiments the mounting lugs could be oriented such that they mount the beam in different rotational orientations at each of the different heights above the lower arm and / or the underside of the overlapping tile.

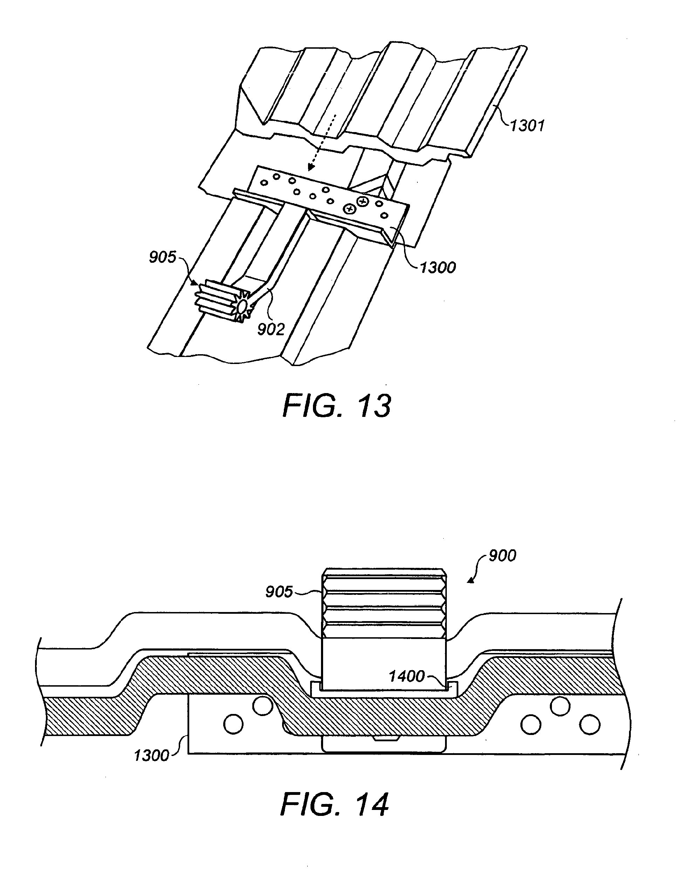

Referring to Figure 13 herein, there is illustrated schematically a method of installation of the mounting bracket of Figures 9 - 12 on a tiled roof. One or more roof tiles are removed using conventional roofing techniques. The lower arm of the mounting bracket may either be bolted to a length of angle bracket 1300, and the angle bracket may be screwed or otherwise fixed to a horizontal or upright batten comprising part of the roof structure or may be fixed to an additional or existing horizontal batten. Where the roof is fitted with a profiled tile type as shown in Figure 13, the first component of the mounting bracket may be situated in a trough or valley of the tile as shown. Once secured, the tile which has been removed 1501 may be slid back over the lower tile, over which the first arm component 900 is positioned, so that a lower portion of the upper tile overlaps an upper portion of the lower tile, and overlaps the elongate arm portion 902 of the first component. The splined connecting portion 905 of the first component protrudes from underneath the overlapping tile, and is raised above the upper surface of the lower tile over which it is positioned, due to the angled connecting portion 907 which extends at an angle in the range 30° to 45° to a main length of the lower arm portion 902, and serves to rigidly hold the splined mounting 905 raised above the underlying tile.

The length and angle of the connecting portion 907 is designed such that the splined mounting portion 905 is raised above the upper peaks of the majority of profiled tile types which are likely to be found on the market place, so that there is sufficient room for the lower end of the second component to be slid horizontally on to the splined shaft 905 when the lower arm component is installed on a roof with the tiles replaced. This thereby permits adjustment of the angle of the upper arm 901 after installation of the lower arm, without the need to remove the lower arms from the roof or remove any further tiles, after the lower arm has been installed.

Referring to Figure 14 herein, there is illustrated schematically in a direction looking upwardly and in a direction of the fall of the roof, showing in end view the lower arm 900 of the mounting bracket, and showing an angle plate 1300. The lower arm 900 of the mounting bracket may be rested on an underlying tile with an intermediate plastic or elastomeric moulding 1400 being placed between the upper surface of the trough of the tile, and the underneath of the lower arm 900 in order to seat the lower arm into the trough snugly, and to distribute the weight of the arm uniformly on the tile, to avoid the arm rattling, or cracking the underlying tile. The splined engaging portion 905 is held sufficiently high over the adjacent peaks of the underlying tile profile, so as to allow enough room for the lower end of the upper arm 901 to be slid side ways onto the engaging portion 905.

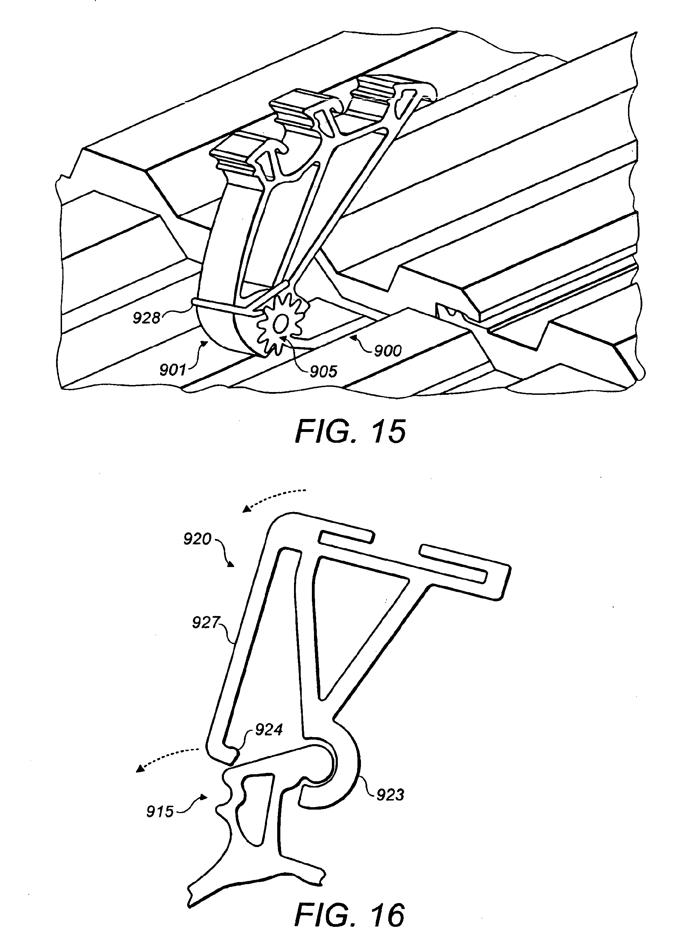

Referring to Figure 15 herein, there is illustrated the second, upper component of the mounting bracket 901 having been slid on to the protruding engaging portion 905 of the lower arm 900. The retaining clip 928 which is normally a pre fitted item, so as to avoid the roof fitter having to carry loose clips, and to guard against dropping clips when at height.

The angle with which the second component 901 forms with the first component 900 is dictated by the engagement of the lower end 909 of the second component, with the projecting engaging portion 905 of the first component 900. Since an inner surface of the engaging portion 909 of the second component has an opposite shaped engaging surface to the engaging surface of the engaging portion 905 of the first component, and since the engaging portion of the first component comprises a plurality of radially outwardly extending protrusions, in the form of splines or gear like teeth, the second component can be mounted to the first component over a range of pre-determined discrete angles dictated by the pitch between the peaks and troughs of the engaging surfaces of the lower engaging portion 909 of the upper arm, and the engaging portion 905 of the lower arm. To adjust the angle of the upper arm with respect to the lower arm, the upper arm is slid horizontally along the teeth of the engaging part 905 of the lower arm, rotated slightly to align at a different angle, and then slid back over the engaging portion 905 of the first component. For this operation, the retaining spring 928 needs to be disengaged or deflected form its fitted locking position .

Each of the mounting lugs 915, 916 and 917 respectively are positioned at progressively further distances away from a central axis at the centre of the concave engaging portion 909 of the second component, so that as the second component is adjusted angularly with respect to the first component, the distance of the mounting surface on the mounting lug relative to the central axis of the splined component 905 is varied, thereby enabling variation of the height of the beam 920 relative to the underlying roof in a series of discrete height steps.

In an installation of four such mounting brackets on a roof, typically all four mounting brackets would be adjusted to the same angle as each other, so that all four brackets present the same, first, second or third mounting lug for attachment of a pair of cross beams, on to which the solar panel, array or the like is fitted, so that the panel or array can be mounted at a choice of heights above the underlying roof structure, to accommodate different sized tiles or different heights of profile of tile, depending upon the particular roof structure and installation requirements.

Referring to Figure 16 herein, there is illustrated schematically in view from one end of beam 920, fitment of the cross beam 920 to a mounting lug 915. The cross beam 920 is fitted to a plurality of mounting lugs 915 of a plurality of mounting brackets arranged in a line horizontally along the roof. Typically, the cross beam 920 may be mounted across a pair of horizontally spaced apart mounting brackets. Each mounting bracket is oriented with its upper arm at the same angle to its lower arm, that is, the orientation of the second component 901 to the first component 900 is at the same angle, and the engaging portions are engaged along the same orientation of splines on each mounting bracket. In this case, the foremost mounting lug 915 is selected. The beam 920 is fitted to a plurality of mounting brackets at the same time in a single action by an operative.

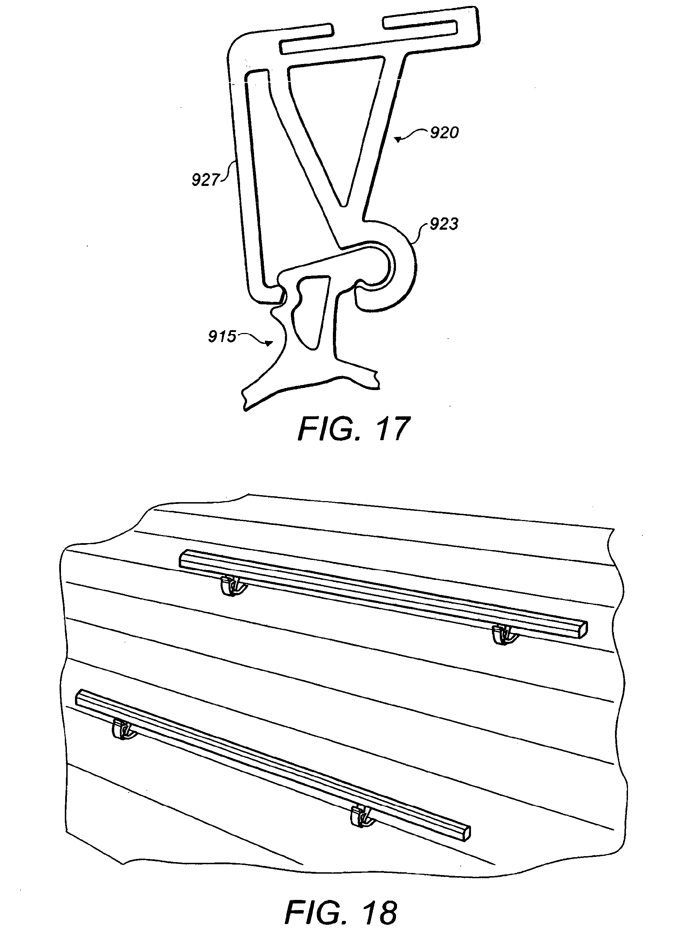

To fit the mounting bracket, an operator places the cup shaped recess of the curved engaging portion 923 of the beam over the projecting rearwardly facing overhanging ends of the mounting lugs 915. The forward downwardly extending skirt portion 927 rests upon the substantially flat upper surface of the mounting lug 915. The distance between the inner surface of the cup shaped curved engaging portion 923, and the projecting engaging portion 924 of the downwardly extending skirt is such that the upper part of the mounting lug 915 will not fit into place without rotational force being exerted on the beam in the direction shown arrowed in Figure 18. This torque has the effect of slightly bending the downwardly extending skirt 927 in a forward direction, allowing the lower engaging portion 924 to slide over the forward portion of the mounting lug 915, and engaging in the elongate recess or trough provided at the front face of the mounting lug 915.

An upwardly extending elongate lip on a lower part of the curved engaging portion 923 engages in a recess positioned in the underside of the overhanging rearward portion of the mounting lug, so that the mounting lug is positioned between the inwardly projecting engaging portion 924 of the skirt 927, and the cupped portion of the curved engaging portion 923 of the beam.

The dimensions of the elongate beam 920 and the mounting lug 915 are designed such that under the force of a human hand, the beam 920 can be "snapped" into place by twisting the beam about the rearward portion of the mounting lug, such that the beam then clicks into place , and is rigidly held to the mounting lug 915. The design is a "snap fit" and the rigid skirt section must be flexible enough-to deflect to allow the beam to engage the mounting head 915 correctly..

Referring to Figure 18, there is illustrated schematically in view from one end of beam 920, the beam which has been clipped into place on a pair of mounting lugs 915. The material strength, topography and tolerances of the lipped engaging portion 923, the downwardly extending skirt 927 and the lips and recesses on the mounting lug 915 are designed and engineered such that the beam stays retained to the mounting lugs 915 even under conditions of high wind loading on any solar panels or arrays mounted to the beam, and under condition of freezing of the components, and heating up of the components in direct sun light. The amount of force between the skirt portion 927 and the curved engaging portion 923, and the friction of the materials used are such that no significant movement in the horizontal direction along a main length of the beam will occur under normal wind loadings, preventing the beam from sliding side ways relative to the mounting brackets.

The mounting beam 920 can be fitted to the mounting lugs 915 without the need for any tools, and using only the force of human strength.

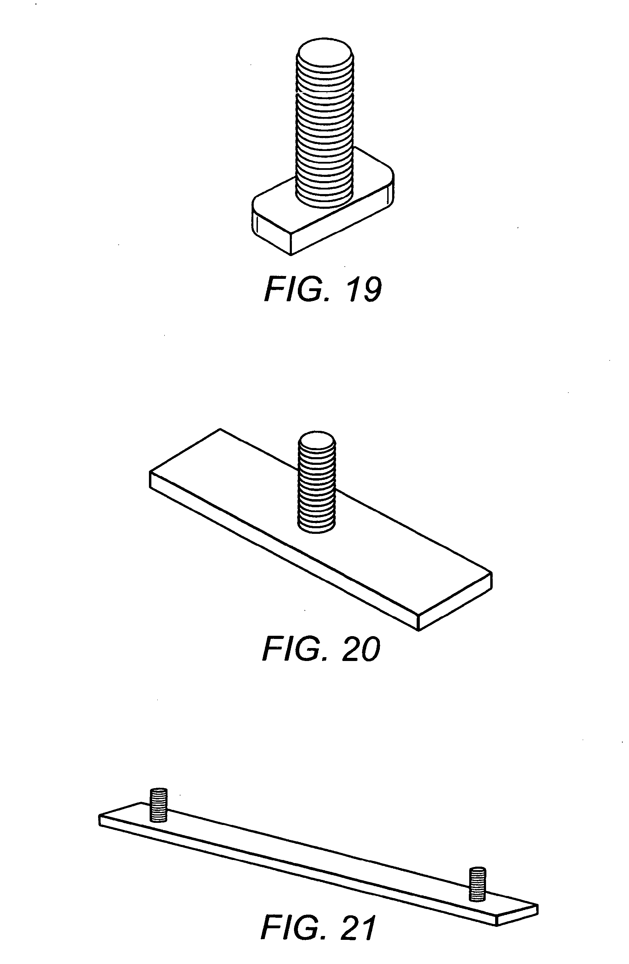

Referring to Figure 19 herein, there is illustrated schematically, a completed installation of a novel roof mounting kit for a solar panel, solar array or the like as presented herein. Four mounting brackets are arranged at the corners of a rectangle on the roof, installed as herein described. A pair of beams are fixed to the mounting brackets as described with reference to Figures 17 and 18 herein. The finished mounting kit is now ready for direct attachment of a solar panel, solar array or the like, using a selection of "T" bolts, or flat plate connectors as shown in Figures 19 to 21 herein, which are slid into the "T" shaped channels on the upper part of the beams 920. The solar panel, array or the like is bolted directly to the beams. As with the known roof mounting kits, the pipe work or electricity cables from the solar panel or array need to be fed through the roof, to the interior of the house or building to connect to the power supply or heating system of the building or house, in the conventional manner.

## Claims

1. A mounting for a solar panel, solar array or the like, said mounting comprising:
a first component (900) adapted for being rigidly mounted to a structure;
a second component (901) configured to engage said first component, said second component having a plurality of mounting points;
engaging means for engaging said first and second components with respect to each other, wherein
an orientation of said second component is adjustable with respect to said first component in a rotational direction such that said mounting points provide a plurality of different possible mounting locations at different distances from said first component, and at different heights relative to an axis of rotation between said first and second components,
**characterized in that** said second component is angularly adjustable with respect to said first component, such that said first and second components may form a plurality of pre-determined angles with respect to each other,
wherein said engaging means comprises a splined connection between said first component and said second component.

2. The mounting as claimed in any one of the preceding claims, wherein said first component comprises an engaging portion comprising a plurality of extending finger-like projections.

3. The mounting as claimed in claim 2, wherein said second component comprises an engaging portion configured to wrap around said plurality of outwardly extending finger-like projections, in a locked angular relationship therewith.

4. The mounting as claimed in any one of the preceding claims, wherein said plurality of mounting points comprise a plurality of mounting lugs, adapted for mounting a beam thereto.

5. The mounting as claimed in any one of the preceding claims, wherein a said mounting point comprises:
a head portion;
a first engaging region positioned at a rear of said head portion; and
a second engaging region positioned at a front of said head portion;
said head portion being positioned between said first rearwardly positioned engaging portion and said second, forwardly positioned engaging portion.

6. The mounting as claimed in any one of the preceding claims, wherein said first and second components are detachable from each other by moving said first and second components relative to each other in a direction transverse to a plane in which they are adjustable with respect to each other.

7. The mounting as claimed in any one of the preceding claims, further comprising a retaining means for retaining said first and second components to each other and for preventing said first and second components moving relative to each other in a direction transverse to a plane in which said components are adjustable with respect to each other.

8. The mounting as claimed in claim 7, wherein said retaining means comprises a spring clip.

9. A mounting kit for a solar panel, solar array or the like, said mounting kit comprising:
a plurality of mountings as claimed in any one of claims 1 to 7 herein; and
one or a plurality of elongate beams (920);
wherein said one or a plurality of elongate beams are configured to engage a pair of said mounting points of a corresponding respective pair of said mountings, without the need for tools.

10. A mounting kit as claimed in claim 9, wherein a said elongate beam comprises:
a rigid elongate body portion;
first engaging portion (923) extending from said body portion and attached thereto;
a second engaging portion (924) facing opposite and spaced apart from said first engaging portion, said second engaging portion being attached to said body portion, wherein said second engaging portion is positioned in a fixed spatial relationship to said first engaging portion.

## Patentansprüche

1. Eine Befestigung für einen Sonnenkollektor, ein Sonnenarray oder dergleichen, umfassend:
eine erste Komponente (900), die für eine rigide Befestigung an einer Struktur angepasst ist;
eine zweite Komponente (901), die konfiguriert ist, die erste Komponente anzustellen, die zweite Komponente umfassend eine Vielzahl von Befestigungspunkten;
Eingriffsmittel für Anstellen die erste und die zweite Komponenten zueinander, wobei
eine Orientierung der zweiten Komponente in Bezug auf die erste Komponente in Rotationsrichtung einstellbar ist so dass die Befestigungspunkte eine Vielzahl von verschiedenen Befestigungsorten an verschieden Abständen von der ersten Komponente, und an verschiedenen Höhen relativ zu einer Rotationsachse zwischen der ersten und der zweiten Komponenten umfasst;
**dadurch gekennzeichnet, dass** die zweite Komponente winklich in Bezug auf die erste Komponente einstellbar ist, so dass die erste and und die zweite Komponenten eine Vielzahl von vorbestimmten Winkeln in Bezug zueinander bilden können,
wobei das Eingriffsmiteel einen Zahnanschluss zwischen der ersten und der zweiten Komponenten umfasst.

2. Die Befestigung nach einem der vorhergehenden Ansprüche, wobei die erste Komponente ein Eingriffsteil umfasst, das eine Vielzahl von nach aussen erstreckenden fingerartigen Vorsprüngen umfasst.

3. Die Befestigung nach Anspruch 2, wobei die zweite Komponente ein Eingriffsteil umfasst, das konfiguriert ist, die Vielzahl von nach aussen erstreckenden fingerartigen Vorsprüngen zu umwickeln, in einer verschlossenen Winkelposition-beziehung dazu.

4. Die Befestigung nach einem der vorhergehenden Ansprüche, wobei die Vielzahl von Befestigungspunkten eine Vielzahl von Befestigungsfahnen umfasst, die angepasst sind, einen Träger an sich befestigen.

5. Die Befestigung nach einem der vorhergehenden Ansprüche, wobei ein Befestigungspunkt umfasst:
ein Kopfteil;
einen ersten Eingriffsbereich, der an einer Rückseite des Kopfteiles; positioniert ist und
einen zweiten Eingriffsbereich, der an einer Vorderseite des Kopfteiles positioniert ist;
das Kopfteil, das zwischen der ersten rückwärtig positionierten Eingriffsbereich und der zweiten, nach vorn positionierten Eingriffsbereich positioniert ist.

6. Die Befestigung nach einem der vorhergehenden Ansprüche, wobei die erste und die zweite Komponenten voneinander, durch Bewegung der ersten und die zweiten Komponenten relativ zueinander in einer Richtung, die quer zu der Ebene, in der sie einstellbar einzuander sind, lösbar sind.

7. Die Befestigung nach einem der vorhergehenden Ansprüche, weiter umfassend ein Haltemittel für Halten die erste und die zweite Komponente zueinander and zum Verhindern die erste und die zweite Komponente von Bewegung relativ zueinander in einer Richtung, die quer zu der Ebene, in der die Komponenten die Komponenten einstellbar einzuander sind, ist.

8. Die Befestigung nach Anspruch 7, wobei das Haltemittel einen Federband umfasst.

9. Ein Befestigungsset für einen Sonnenkollektor, ein Sonnenarray oder dergleichen, das Befestigungsset umfassend:
eine Vielzahl von Befestigungen nach einem der Ansprüche 1 bis 7 hierin; und
einen oder eine Vielzahl von verlängerten Trägern (920);
wobei die ein oder eine Vielzahl von verlängerten Trägern konfiguriert sind, ein Paar von den Befestigungspunkten von dem entsprechenden Paar von den Befestigungen anzustellen, ohne Werkzeuge-notwendigkeit.

10. Ein Befestigungsset nach Anspruch 9, wobei die verlängerte Träger umfasst:
ein rigides verlängertes Körperteil;
einen ersten Eingriffsbereich (923), der sich von dem Körperteil erstreckt und ist zu dem angehängt; wobe der zweite Eingriffsbereich in einer festgelegten räumlichen Beziehung zu dem ersten Eingriffsbereich positioniert ist.

## Revendications

1. Une monture pour un panneau solaire, un champ de panneaux photovoltaïques ou leur équivalent, ladite monture comprenant:
un premier élément (900) adapté à être monté rigidement à une structure;
un second élément (901) configuré pour engager ledit premier élément, ledit second élément possédant plusieurs points de montage;
un moyen d'engagement pour engager lesdits premier et second éléments l'un vis-à-vis de l'autre, dans laquelle;
une orientation dudit second élément est ajustable par rapport audit premier élément selon une direction de rotation telle que lesdits points de montage fournissent plusieurs possibilités d'endroits de montage différents à des distances différentes vis-à-vis dudit premier élément, selon des hauteurs différentes par rapport à un axe de rotation entre lesdits premier et second éléments,
**caractérisée en ce que** ledit second élément est ajustable angulairement par rapport audit premier élément, de sorte que lesdits premier et second éléments puissent former plusieurs angles prédéterminés l'un par rapport à l'autre,
dans laquelle ledit moyen d'engagement comprend une connexion cannelée entre lesdits premier et second éléments.

2. La monture selon la revendication 1, dans laquelle ledit premier élément comprend une portion d'engagement comprenant plusieurs projections en extension comparables à des doigts.

3. La monture selon la revendication 2, dans laquelle ledit second élément comprend une portion d'engagement configurée pour s'enrouler autour desdites plusieurs projections en extension sortante comparables à des doigts, selon une relation angulaire verrouillée avec lesdites plusieurs projections.

4. La monture selon l'une des revendications précédentes, dans laquelle lesdits plusieurs points de montage comprennent plusieurs anses de montage, adaptées pour y monter une poutre.

5. La monture selon l'une des revendications précédentes, dans laquelle un dit point de montage comprend:
une portion de tête;
une première région d'engagement positionnée sur un arrière de ladite portion de tête;
une seconde région d'engagement positionnée sur un avant de ladite portion de tête;
ladite portion de tête étant positionnée entre ladite première région d'engagement positionnée vers l'arrière et ladite second région d'engagement positionnée vers l'avant.

6. La monture selon l'une des revendications précédentes, dans laquelle lesdits premier et second éléments sont détachables l'un vis-à-vis de l'autre en déplaçant lesdits premier et second éléments l'un par rapport à l'autre selon une direction transversale à un plan dans lequel ils sont ajustables l'un par rapport à l'autre.

7. La monture selon l'une des revendications précédentes, comprenant en outre un moyen de retenue pour retenir lesdits premier et second éléments l'un à l'autre et pour empêcher le déplacement desdits premier et second éléments l'un par rapport à l'autre selon une direction transversale à un plan dans lequel lesdits premier et second éléments sont ajustables l'un par rapport à l'autre.

8. La monture selon la revendication 7, dans laquelle ledit moyen de retenue comprend une bague de serrage.

9. Un kit de montage pour un panneau solaire, un champ de panneaux photovoltaïques ou leur équivalent, ledit kit de montage comprenant:
plusieurs montures selon l'une des revendications 1 à 7; et
une ou plusieurs poutres allongées (920);
dans lequel lesdites une ou plusieurs poutres allongées sont configurées pour engager une paire desdits points de montage d'une paire respective correspondante desdites montures, sans recourir à des outils.

10. Un kit de montage selon la revendication 9, dans lequel une dite poutre allongée comprend:
une portion de corps rigide allongée;
une première portion d'engagement (923) s'étendant depuis ladite portion de corps et y étant attachée;
une deuxième portion d'engagement (924) faisant face opposée à, et distante vis-à-vis de, ladite première portion d'engagement, ladite deuxième portion d'engagement étant attachée à ladite portion de corps, dans lequel ladite deuxième portion d'engagement est positionnée selon une relation spatiale fixe vis-à-vis de ladite première portion d'engagement.
